# EUROPÄISCHE PATENTSCHRIFT

(11) **EP 0 945 196 B1**
(45) Veröffentlichungstag und Bekanntmachung des Hinweises auf die Patenterteilung: **28.04.2004**
(21) Anmeldenummer: 99105336.4
(22) Anmeldetag: 16.03.1999
(51) Int. Cl.: B21D 43/20, B21D 43/28, B23Q 7/00, B23Q 7/08, B23Q 7/12

(54) **Vorrichtung zum Sortieren von Werkstückteilen an einer Maschine zum schneidenden Bearbeiten von Werkstücken**
Device for sorting workpieces at a machine for cutting workpieces
Dispositif pour trier les pièces à d'une machine pour couper des pièces de travail

(30) Priorität: 21.03.1998 DE 29805197 U
(43) Veröffentlichungstag der Anmeldung: 29.09.1999
(73) Patentinhaber: Trumpf GmbH & Co, D-71254 Ditzingen (DE)
(72) Erfinder: Bytow, Peter, 75397 Simmozheim (DE)
(74) Vertreter: KOHLER SCHMID + PARTNER

(56) Entgegenhaltungen:
- EP-A- 0 262 442
- EP-A- 0 319 821
- DE-C- 487 641
- GB-A- 1 153 986
- GB-A- 1 258 448
- US-A- 3 010 160
- US-A- 3 866 498
- US-A- 4 422 815

## Beschreibung

Die Erfindung betrifft eine Vorrichtung zum Sortieren von an einer Maschine zum schneidenden Bearbeiten von Werkstücken bei der Bearbeitung an einer Bearbeitungsstation ausgeschnittenen Werkstückteilen mit wenigstens einer an der Bearbeitungsstation unterhalb einer Ebene des bearbeiteten Werkstücks anordenbaren Leiteinrichtung, mittels derer die Werkstückteile in zumindest zwei verschiedene Abförderrichtungen lenkbar und dadurch zwei verschiedenen Ablageorten zuführbar sind und die ein Leitelement in Form einer Leitklappe mit einer Leitfläche für die Werkstückteile umfasst, wobei die Leitklappe um zwei parallel zueinander verlaufende und parallel zu der Leitfläche voneinander beabstandete Schwenkachsen schwenkbar und in wenigstens zwei verschiedene Schwenkstellungen steuerbar ist, denen verschiedene Abförderrichtungen der Werkstückteile zugeordnet sind.

Sortiervorrichtungen für Werkstückteile werden bekanntermaßen an Blechschneidmaschinen eingesetzt, mittels derer aus Blechtafeln Blechteile mit vorgegebenen Konturen ausgeschnitten werden. Die Schneidstation der Maschine ist dabei während der Werkstückbearbeitung ebenso ortsfest wie eine Leiteinrichtung für die Werkstückteile, die als Leitelemente für die Werkstückteile zwei in unterschiedliche Richtungen führende schiefe Ebenen aufweist. Die zu bearbeitende Blechtafel wird mittels einer numerisch gesteuerten Koordinatenführung gegenüber der Schneidstation der Maschine bewegt. Mit Trennen der letzten Verbindungsstelle zwischen dem Blechteil und der Blechtafel fällt das ausgeschnittene Blechteil unter der Wirkung der Schwerkraft von der Schneidstation nach unten und gelangt dabei auf eine der beiden schiefen Ebenen der Leiteinrichtung. Auf welche der beiden schiefen Ebenen das Blechteil gelangt und folglich die Richtung der Abförderung des Blechteiles wird bestimmt durch die Lage des Blechteiles gegenüber der Leiteinrichtung zu demjenigen Zeitpunkt, zu dem seine letzte Verbindung mit der restlichen Blechtafel durchtrennt wird und somit durch die Lage der letzten Verbindung an dem Blechteil. Dementsprechend ist die Koordinatenführung der vorbekannten Maschine derart zu steuern, daß das ausgeschnittene Blechteil bei Erstellen des letzten Trennschnittes über derjenigen der beiden schiefen Ebenen der Leiteinrichtung angeordnet ist, mittels derer die Abförderung in die gewünschte Abförderrichtung bewerkstelligt werden kann. Die Lage des letzten Trennschnittes an dem Werkstück ist durch Programmieren der Maschinensteuerung entsprechend vorzugeben und variiert je nach gewünschter Abförderrichtung.

Das Sortieren der an der Schneidstation derartiger Blechschneidmaschinen anfallenden Werkstückteile bedarf eines beachtlichen Steuerungs- bzw. Programmierungsaufwandes.

Eine gattungsgemäße Vorrichtung ist bekannt aus US 4,422,815 A.

Ausgehend von dem letztgenannten Stand der Technik besteht die Aufgabe der vorliegenden Erfindung darin, eine Sortiervorrichtung mit platzsparender Bauweise der Leiteinrichtung zur Verfügung zu stellen.

Erfindungsgemäß gelöst wird diese Aufgabe durch die Sortiervorrichtungen nach den unabhängigen Patentansprüchen 1 und 2.

Die anspruchsgemäßen Vorrichtungen erlauben ein Sortieren der an der Bearbeitungsstation ausgeschnittenen Werkstückteile unter der Voraussetzung, daß diese bei Herstellen des letzten Trennschnittes eine Position einnehmen, von der ausgehend sie zu der Leiteinrichtung gelangen können. Erst an der Leiteinrichtung wird die Abförderrichtung der Werkstückteile zu den verschiendenen Ablageorten festgelegt. Die zu diesem Zweck erforderliche Steuerung des Leitelementes bedarf eines lediglich geringen Aufwandes. Die Schnittführung entlang der Außenkontur der erstellten Werkstückteile kann folglich einheitlich und ohne daß dabei der auf die Werkstückbearbeitung folgende Sortiervorgang mittels des oder der Leitelemente berücksichtigt werden müßte, gewählt werden. Die vorgesehene, um zwei Schwenkachsen schwenkbare Leitklappe mit einer Leitfläche für die Werkstückteile stellt ein konstruktiv einfaches und funktionssicheres Leitelement mit einer einfachen Kinematik dar.

Die Verriegelbarkeit von Leitklappe und Tragplatte gemäß Patentanspruch 1 eröffnet die Möglichkeit, mit einer einzigen Hubvorrichtung die Leitklappe wahlweise um die eine oder um die andere Schwenkachse zu schwenken. Ausweislich Patentanspruch 2 nimmt die anspruchsgemäße Tragplatte bei der Schwenkbewegung um die zweite Schwenkachse die an ihr abgestützte Leitklappe in Schwenkrichtung mit.

In bevorzugter Weiterbildung der erstgenannten Erfindungsbauart sind die Leitklappe und die Tragplatte mittels eines gesteuert verschiebbaren Riegelzapfens an dem einen und einem Riegelzapfenwiderlager an dem anderen Teil miteinander verriegelbar.

Erfindungsgemäß ist der Riegelzapfen dabei von einer Kolbenstange einer gesteuert betätigbaren Kolben-Zylinder-Einheit gebildet.

Als dauerhaft funktionssichere und einfach zu steuernde Hubvorrichtung für die Leitklappe bzw. die Tragplatte ist im Falle einer Ausführungsform der erfindungsgemäßen Vorrichtungen nach den Patentansprüchen 1 und/oder 2 eine an der Leitklappe bzw. an der Tragplatte um eine parallel zu der betreffenden Schwenkachse drehbar angelenkte steuerbare Kolben-Zylinder-Einheit vorgesehen.

Eine sichere Zwischenablage der an der Bearbeitungsstation ausgeschnittenen Werkstückteile vor ihrer Abförderung zu verschiedenen Ablageorten wird in Weiterbildung der Erfindung dadurch ermöglicht, daß der Leiteinrichtung eine Rutsche vorgeschaltet ist zur Zuförderung der Werkstückteile von der Bearbeitungsstation her und daß die Leitklappe bei im wesentlichen horizontaler Ausrichtung mit einem in Zuförderrichtung wirksamen Anschlag für die Werkstückteile versehen ist. Über die Rutsche gelangen die Werkstückteile auf die Leitklappe, wo sie der dort vorgesehene Anschlag zurückhält, ehe sie anschließend durch entsprechende Steuerung der Leitklappe in die gewünschte Richtung gelenkt und abgefördert werden.

Nachfolgend wird die Erfindung anhand schematischer Darstellungen zu einem Ausführungsbeispiel näher erläutert. Es zeigen:
- Figuren 1 und 2: Prinzipdarstellungen zu einer Vorrichtung zum Sortieren von Stanzteilen an einer Blechstanzmaschine und
- Figuren 3 und 4: Detaildarstellungen zu der Sortiervorrichtung nach den Fign. 1 und 2.

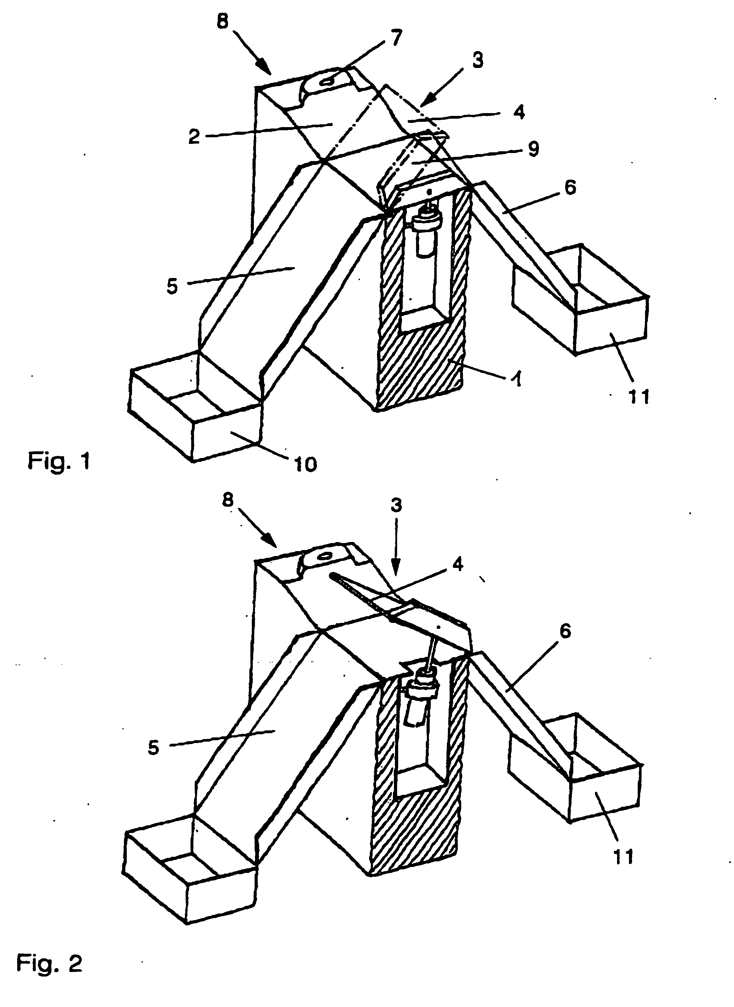

Gemäß Figur 1 ist eine Sortiervorrichtung für Blechteile an einem Grundrahmen 1 einer Blechstanzmaschine angeordnet. Die Sortiervorrichtung umfaßt im wesentlichen eine Zuförderrutsche 2, eine Leiteinrichtung 3 mit einem Leitelement in Form einer Leitklappe 4 sowie Abförderrutschen 5, 6.

Die Zuförderrutsche 2 erstreckt sich von einer Stanzmatrize 7 einer als Stanzstation 8 ausgebildeten Bearbeitungsstation geneigt nach unten. Die Stanzmatrize 7 lagert das zu bearbeitende Blech bei seiner Bearbeitung und definiert gemeinsam mit einem Werkstücktisch die Blechebene. Die Leiteinrichtung 3 schließt sich an der von der Stanzmatrize 7 abliegenden Seite der Zuförderrutsche 2 mit der Leitklappe 4 an die Zuförderrutsche 2 an. In der in Figur 1 mit ausgezogenen Linien veranschaulichten Ausgangslage ist die Leitklappe 4 horizontal ausgerichtet. Der Zuförderrutsche 2 gegenüberliegend weist sie einen Anschlag 9 für die ihr zugeführten Blechteile auf. Von der Leitklappe 4 ausgehend erstrecken sich die Abförderrutschen 5, 6 in einander entgegengesetzte Richtungen und münden in Sammel- und Transportkästen 10, 11.

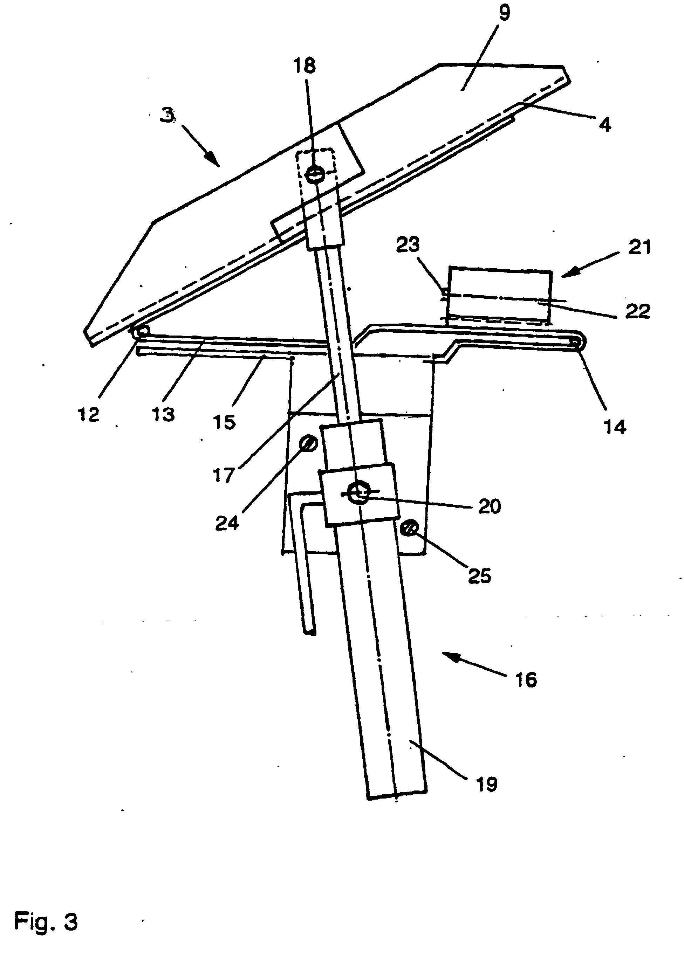

An der Stanzstation 8 werden numerisch gesteuert Blechteile mit unterschiedlichen Konturen aus einer Blechtafel stanzend ausgeschnitten. Einheitlich konturierte Blechteile sind zum Ausschleusen aus der Blechstanzmaschine ein und demselben Sammel- und Transportkasten 10, 11 zuzuführen. Zu diesem Zweck wird das stanzend zu bearbeitende Blech mittels einer numerisch gesteuerten Koordinatenführung gegenüber der Stanzstation 8 derart positioniert, daß sich das betreffende Blechteil beim Durchtrennen seiner letzten Verbindung mit dem restlichen Blech oberhalb der Zuförderrutsche 2 befindet. Nach Erstellen des letzten Trennschnittes fällt das betreffende Blechteil folglich auf die Zuförderrutsche 2, über welche es unter Schwerkraftwirkung auf die horizontal ausgerichtete Leitklappe 4 der Leiteinrichtung 3 gelangt und dort zwischengelagert wird. Der Anschlag 9 verhindert dabei, daß das Blechteil in Zuförderrichtung über die Leitklappe 4 hinausrutscht. Beispielsweise in Abhängigkeit von den Abmessungen des erstellten Blechteiles wird die Leitklappe 4 für jedes auf der Leitklappe 4 zwischengelagerte Blechteil oder für mehrere Blechteile betätigt. Dabei kann die Leitklappe 4 in die in Figur 1 mit unterbrochenen Linien dargestellte oder in die aus Figur 2 ersichtliche Stellung geschwenkt werden. Bei der einseitig angehobenen Stellung gemäß Figur 1 erfolgt eine Abförderung des oder der auf der Leitklappe 4 zwischengelagerten Blechteile über die Abförderrutsche 5 in den Sammel- und Transportkasten 10. Entsprechend werden auf der Leitklappe 4 zwischengelagerte Blechteile bei der Stellung der Leitklappe 4 gemäß Figur 2 über die Abförderrutsche 6 dem Sammel- und Transportkasten 11 zugeführt.

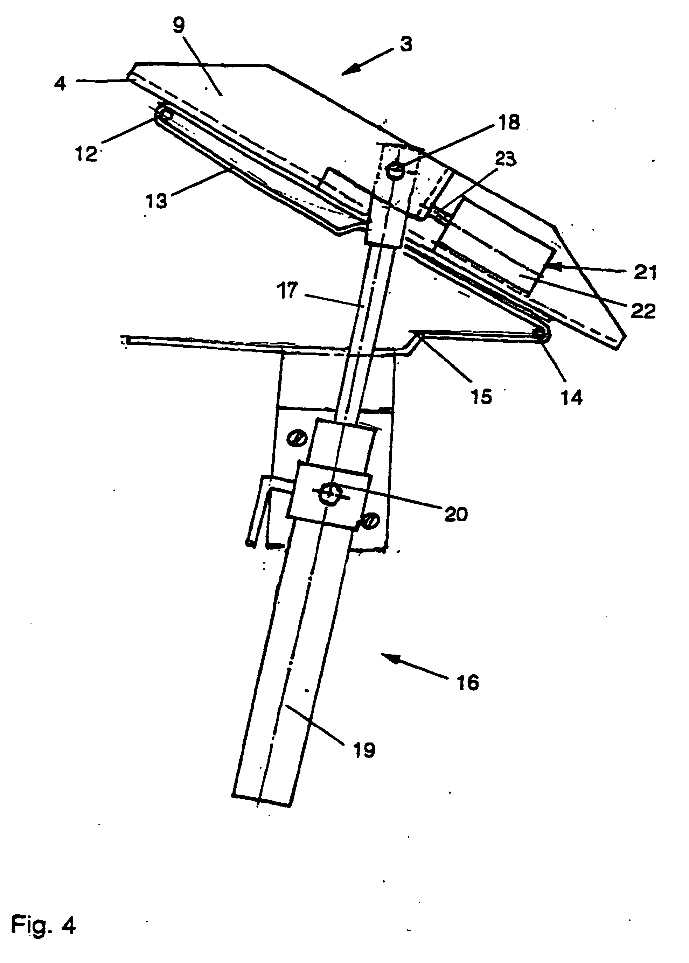

Die konstruktiven Einzelheiten zur Realisierung der beschriebenen Kinematik der Leitklappe 4 gehen aus den Figuren 3 und 4 hervor. Demnach ist die Leitklappe 4 um eine erste Schwenkachse 12 schwenkbar mit einer die Leitklappe 4 in Schwenkrichtung einseitig abstützenden Tragplatte 13 verbunden. Die Tragplatte 13 wiederum ist um eine zweite Schwenkachse 14 mit einem Grundblech 15 verbunden, das seinerseits an dem Grundrahmen 1 der Blechstanzmaschine angebracht ist. Mit Abstand von der ersten Schwenkachse 12 sowie von der zweiten Schwenkachse 14 parallel zu der Ebene der Auflagefläche für die Blechteile an der Leitklappe 4 sowie in Querrichtung der Schwenkachsen 12, 14 greift an der Leitklappe 4 eine Hubvorrichtung in Form einer steuerbaren pneumatischen Kolben-Zylinder-Einheit 16 an. Eine Kolbenstange 17 ist dabei über einen Drehachszapfen 18 an dem Anschlag 9 der Leitklappe 4 angelenkt. Eine Schwenkverbindung zwischen einem Zylinder 19 der Kolben-Zylinder-Einheit 16 mit dem Grundrahmen 1 der Blechstanzmaschine ist über einen Drehachszapfen 20 hergestellt.

Eine weitere steuerbare pneumatische Kolben-Zylinder-Einheit 21 ist an der Tragplatte 13 angebracht. Sie umfaßt einen fest mit der Tragplatte 13 verbundenen Zylinder 22 sowie eine darin gemäß Figur 3 in horizontaler Richtung verschiebbar geführte Kolbenstange 23 und dient zur gegenseitigen Verriegelung der Leitklappe 4 sowie der Tragplatte 13. Zu diesem Zweck ist dem als Riegelzapfen genutzten freien Ende der Kolbenstange 23 als Riegelzapfenwiderlager an der Leitklappe 4 eine Bohrung an dem Anschlag 9 zugeordnet. Befestigungsschrauben 24, 25 halten die Lagerung des Drehachszapfens 20.

Figur 3 zeigt die Leitklappe 4 in der angehobenen Stellung gemäß Figur 1, bei welcher die Blechteile dem Sammel- und Transportkasten 10 zugeführt werden. Sollen die an der Stanzstation 8 gefertigten Blechteile - beispielsweise weil der Sammel- und Transportkasten 10 gefüllt ist oder weil Blechteile mit geänderter Kontur hergestellt werden - in den Sammel- und Transportkasten 11 abgefördert werden, so ist die Leitklappe 4 aus ihrer angehobenen Stellung gemäß den Figuren 1 und 3 zunächst unter Betätigen der Kolben-Zylinder-Einheit 16 in ihre horizontale Ausgangslage zu verschwenken, in welcher sie die betreffenden Blechteile zwischenlagern kann. Anschließen läßt sich die Leitklappe 4 durch Ausfahren der Kolbenstange 23 der Kolben-Zylinder-Einheit 21 an der Tragplatte 13 verriegeln. Durch Betätigen der Kolben-Zylinder-Einheit 16 wird die Einheit aus Leitklappe 4 und Tragplatte 13 nun in die Stellung gemäß den Figuren 2 und 4 geschwenkt. Die der Leitklappe 4 zuvor über die Zuförderrutsche 2 zugeführten und auf der Leitklappe 4 zwischengelagerten Blechteile können dann über die Abförderrutsche 6 in den Sammel- und Tansportkasten 11 gelangen. Damit beim Schwenken der Leitklappe 4 in die angehobene Stellung nach den Figuren 1 und 3 ein unbeabsichtigtes Mitverschwenken der Tragplatte 13 um die zweite Schwenkachse 14 ausgeschlossen ist, kann die Tragplatte 13 vor dem Anheben der Leitklappe 4 aus ihrer horizontalen Ausgangslage beispielsweise mittels der Kolben-Zylinder-Einheit 21 an dem Grundrahmen 1 der Maschine verriegelt werden.

Eine derartige Verriegelung ist verzichtbar bei hinreichender Schwergängigkeit der über die zweite Schwenkachse 14 hergestellten Schwenkverbindung zwischen der Tragplatte 13 und dem Grundblech 15.

Die Steuerzustände des vorstehend beschriebenen Leitelementes - also die Schwenkstellungen der Leitklappe 4 - werden mittels der numerischen Steuerung der Blechstanzmaschine automatisiert eingestellt.

## Patentansprüche

1. Vorrichtung zum Sortieren von an einer Maschine zum schneidenden Bearbeiten von Werkstücken bei der Bearbeitung an einer Bearbeitungsstation (8) ausgeschnittenen Werkstückteilen mit wenigstens einer an der Bearbeitungsstation (8) unterhalb einer Ebene des bearbeiteten Werkstücks anordenbaren Leiteinrichtung (3), mittels derer die Werkstückteile in zumindest zwei verschiedene Abförderrichtungen lenkbar und dadurch zwei verschiedenen Ablageorten zuführbar sind und die ein Leitelement in Form einer Leitklappe (4) mit einer Leitfläche für die Werkstückteile umfasst, wobei die Leitklappe (4) um zwei parallel zueinander verlaufende und parallel zu der Leitfläche voneinander beabstandete Schwenkachsen (12, 14) schwenkbar und in wenigstens zwei verschiedene Schwenkstellungen steuerbar ist, denen verschiedene Abförderrichtungen der Werkstückteile zugeordnet sind, **dadurch gekennzeichnet, daß** die Leitklappe (4) um die erste Schwenkachse (12) schwenkbar mit einer um die zweite Schwenkachse (14) schwenkbar gelagerten und die Leitklappe (4) in Schwenkrichtung einseitig abstützenden Tragplatte (13) verbunden und mit der Tragplatte (13) schwenkfest verriegelbar ist und daß an der Leitklappe (4) mit Abstand von der ersten Schwenkachse (12) sowie von der zweiten Schwenkachse (14) eine steuerbare Hubvorrichtung angreift, mittels derer die Leitklappe (4) um die erste Schwenkachse (12) bzw. die Einheit aus der Leitklappe (4) sowie der damit verriegelten Tragplatte (13) um die zweite Schwenkachse (14) schwenkbar ist.

2. Vorrichtung zum Sortieren von an einer Maschine zum schneidenden Bearbeiten von Werkstücken bei der Bearbeitung an einer Bearbeitungsstation (8) ausgeschnittenen Werkstückteilen mit wenigstens einer an der Bearbeitungsstation (8) unterhalb einer Ebene des bearbeiteten Werkstücks anordenbaren Leiteinrichtung (3), mittels derer die Werkstückteile in zumindest zwei verschiedene Abförderrichtungen lenkbar und dadurch zwei verschiedenen Ablageorten zuführbar sind und die ein Leitelement in Form einer Leitklappe (4) mit einer Leitfläche für die Werkstückteile umfasst, wobei die Leitklappe (4) um zwei parallel zueinander verlaufende und parallel zu der Leitfläche voneinander beabstandete Schwenkachsen (12, 14) schwenkbar und in wenigstens zwei verschiedene Schwenkstellungen steuerbar ist, denen verschiedene Abförderrichtungen der Werkstückteile zugeordnet sind, **dadurch gekennzeichnet, daß** die Leitklappe (4) um die erste Schwenkachse (12) schwenkbar mit einer die Leitklappe (4) in Schwenkrichtung einseitig abstützenden Tragplatte (13) verbunden ist, welche um die zweite Schwenkachse (14) schwenkbar gelagert ist und daß an der Leitklappe (4) mit Abstand von der ersten Schwenkachse (12) und an der Tragplatte (13) mit Abstand von der zweiten Schwenkachse (14) jeweils eine steuerbare Hubvorrichtung angreift, mittels derer die Leitklappe (4) um die erste Schwenkachse (12) bzw. die Einheit aus der Leitklappe (4) sowie der Tragklappe (13) um die zweite Schwenkachse (14) schwenkbar ist.

3. Vorrichtung nach Anspruch 1, **dadurch gekennzeichnet, daß** die Leitklappe (4) und die Tragplatte (13) mittels eines gesteuert verschiebbaren Riegelzapfens an dem einen (13) und einem Riegelzapfenwiderlager an dem anderen Teil (4) miteinander verriegelbar sind.

4. Vorrichtung nach Anspruch 3, **dadurch gekennzeichnet, daß** der Riegelzapfen von einer Kolbenstange (23) einer gesteuert betätigbaren Kolben-Zylinder-Einheit (21) gebildet ist.

5. Vorrichtung nach einem der Ansprüche 1 bis 4, **dadurch gekennzeichnet, daß** als Hubvorrichtung eine an der Leitklappe (4) bzw. an der Tragplatte (13) um eine parallel zu der betreffenden Schwenkachse drehbar angelenkte steuerbare Kolben-Zylinder-Einheit (16) vorgesehen ist.

6. Vorrichtung nach einem der Ansprüche 1 bis 5, **dadurch gekennzeichnet, daß** der Leiteinrichtung (3) eine Rutsche (2) vorgeschaltet ist zur Zuförderung der Werkstückteile von der Bearbeitungsstation (8) her und daß die Leitklappe (4) bei im wesentlichen horizontaler Ausrichtung mit einem in Zuförderrichtung wirksamen Anschlag (9) für die Werkstückteile versehen ist.

## Claims

1. Device for sorting workpiece parts which are cut out at a machine for cutting workpieces when working at a working station (8), with at least one guide device (3), which can be disposed at the working station (8) below a plane of the worked workpiece, by means of which guide device the workpiece parts can be directed in at least two different removal directions and can thereby be fed to two different deposit locations, and which comprises a guide element in the form of a guide flap (4) with a guide face for the workpiece parts, wherein the guide flap (4) can be pivoted about two pivot axes (12, 14), which extend parallel to one another and are spaced apart parallel to the guide face, and controlled in at least two different pivot positions, with which different removal directions of the workpiece parts are associated, **characterised in that** the guide flap (4) is connected, so as to pivot about the first pivot axis (12), to a carrier plate (13), which is mounted so as to pivot about the second pivot axis (14) and supports the guide flap (4) in the pivoting direction on one side, and can be locked in non-pivotable fashion to the carrier plate (13), and that a controllable lifting device acts on the guide flap (4) at a spacing from the first pivot axis (12) and from the second pivot axis (14), by means of which device the guide flap (4) can be pivoted about the first pivot axis (12) or the unit consisting of the guide flap (4) and the carrier plate (13) locked thereto about the second pivot axis (14).

2. Device for sorting workpieces which are cut out at a machine for cutting workpieces when working at a working station (8), with at least one guide device (3), which can be disposed at the working station (8) below a plane of the worked workpiece, by means of which guide device the workpiece parts can be directed in at least two different removal directions and can thereby be fed to two different deposit locations, and which comprises a guide element in the form of a guide flap (4) with a guide face for the workpiece parts, wherein the guide flap (4) can be pivoted about two pivot axes (12, 14), which extend parallel to one another and are spaced apart parallel to the guide face, and controlled in at least two different pivot positions, with which different removal directions of the workpiece parts are associated, **characterised in that** the guide flap (4) is connected, so as to pivot about the first pivot axis (12), to a carrier plate (13), which supports the guide flap (4) in the pivoting direction on one side and which is mounted so as to pivot about the second pivot axis (14), and that controllable lifting devices act on the guide flap (4) at a spacing from the first pivot axis (12) and on the carrier plate (13) at a spacing from the second pivot axis (14), respectively, by means of which devices the guide flap (4) can be pivoted about the first pivot axis (12) or the unit consisting of the guide flap (4) and the carrier plate (13) about the second pivot axis (14).

3. Device according to Claim 1, **characterised in that** the guide flap (4) and the carrier plate (13) can be locked together by means of a locking pin, which can be displaced in controlled fashion, at one part (13) and a locking pin abutment at the other part (4).

4. Device according to Claim 3, **characterised in that** the locking pin is formed by a piston rod (23) of a piston-cylinder unit (21), which can be actuated in a controlled fashion.

5. Device according to any one of Claims 1 to 4, **characterised in that** a controllable piston-cylinder unit (16), which is articulated to the guide flap (4) or the carrier plate (14) so as rotate about an axis which is parallel to the pivot axis concerned, is provided as lifting device.

6. Device according to any one of Claims 1 to 5, **characterised in that** a chute (2) is connected upstream of the guide device (3) to deliver the workpiece parts from the working station (8), and that the guide flap (4) is provided in substantially horizontal alignment with a stop (9) for the workpiece parts, which stop acts in the delivery direction.

## Revendications

1. Dispositif pour le triage de fragments découpés de pièces ouvrées sur une machine pour l'usinage par coupage de pièces ouvrées, lors de l'usinage sur une station d'usinage (8), avec au moins un dispositif directeur (3) pouvant être disposé sur la station d'usinage (8) en dessous d'un plan de la pièce ouvrée usinée, avec lequel les fragments de pièces ouvrées peuvent être dirigés dans au moins deux différentes directions d'extraction et peuvent ainsi être acheminés à deux différents emplacements d'entreposage et qui comprend un élément directeur de la forme d'un clapet directeur (4) avec une surface directrice pour les fragments de pièces ouvrées, dans lequel le clapet directeur (4) est basculant autour de deux axes de basculement (12, 14) s'étendant parallèlement l'un à l'autre et à distance l'un de l'autre parallèlement à la surface directrice et peut être commandé dans au moins deux positions de basculement différentes, auxquelles sont affectées différentes directions d'extraction des fragments de pièces ouvrées, **caractérisé en ce que** le clapet directeur (4) est relié, de manière à pouvoir basculer autour du premier axe de basculement (12), à une plaque support (13) montée de manière à pouvoir basculer autour du deuxième axe de basculement (14) et étayant d'un côté le clapet directeur (4) dans la direction du basculement, et est verrouillable avec la plaque support (13) de manière fixe en basculement et **en ce qu'**un dispositif de levage pouvant être commandé agit sur le clapet directeur (4) à distance du premier axe de basculement (12) ainsi que du deuxième axe de basculement (14), dispositif au moyen duquel le clapet directeur (4) est basculable autour du premier axe de basculement (12), respectivement l' unité constituée du clapet directeur (4) ainsi que de la plaque support (13) verrouillée dessus est basculable autour du deuxième axe de basculement (14).

2. Dispositif pour le triage de fragments découpés de pièces ouvrées sur une machine pour l'usinage par coupage de pièces ouvrées, lors de l'usinage sur une station d'usinage (8), avec au moins un dispositif directeur (3) pouvant être disposé sur la station d'usinage (8) en dessous d'un plan de la pièce ouvrée usinée, avec lequel les fragments de pièces ouvrées peuvent être dirigés dans au moins deux différentes directions d'extraction et peuvent ainsi être acheminés à deux différents emplacements d'entreposage et qui comprend un élément directeur de la forme d'un clapet directeur (4) avec une surface directrice pour les fragments de pièces ouvrées, dans lequel le clapet directeur (4) est basculant autour de deux axes de basculement (12, 14) s'étendant parallèlement l'un à l'autre et à distance l'un de l'autre parallèlement à la surface directrice et peut être commandé dans au moins deux positions de basculement différentes, auxquelles sont affectées différentes directions d'extraction des fragments de pièces ouvrées, **caractérisé en ce que** le clapet directeur (4) est relié de manière à pouvoir basculer autour du premier axe de basculement (12), à une plaque support (13) étayant d'un côté le clapet directeur (4) dans la direction du basculement, laquelle plaque support (13) est montée de manière à pouvoir basculer autour du deuxième axe de basculement (14) et **en ce que** des dispositifs de levage pouvant être commandés agissent respectivement sur le clapet directeur (4) à distance du premier axe de basculement (12) et sur la plaque support (13) à distance du deuxième axe de basculement (14), les dispositifs au moyen desquels le clapet directeur (4) est basculable autour du premier axe de basculement (12), respectivement l'unité constituée du clapet directeur (4) ainsi que de la plaque support (13) est basculable autour du deuxième axe de basculement (14).

3. Dispositif selon la revendication 1, **caractérisé en ce que** le clapet directeur (4) et la plaque support (13) peuvent être verrouillés ensemble au moyen d'un pêne de verrouillage coulissant moyennant commande sur l'une (13) et au moyen d'un contre-appui de pêne de verrouillage sur l'autre (4) pièce.

4. Dispositif selon la revendication 3, **caractérisé en ce que** le pêne de verrouillage est formé par une tige de piston (23) d'une unité piston-cylindre (21) pouvant être actionnée par commande.

5. Dispositif selon l'une quelconque des revendications 1 à 4, **caractérisé en ce que**, comme dispositif de levage, est prévue une unité piston-cylindre (16) articulée de façon tournante sur le clapet directeur (4), respectivement sur la plaque support (13) parallèlement à l'axe de basculement correspondant.

6. Dispositif selon l'une quelconque des revendications 1 à 5, **caractérisé en ce qu'**une goulotte (2) est disposée en amont du dispositif directeur (3) pour l'amenée des fragments de pièces ouvrées depuis la station d'usinage (8) et **en ce que** le clapet directeur (4), étant orienté essentiellement à l'horizontale, est doté d'une butée (9) pour les fragments de pièces ouvrées, la butée agissant dans la direction du transport d'amenée.
